# EUROPÄISCHE PATENTSCHRIFT

(11) **EP 1 124 628 B1**
(45) Veröffentlichungstag und Bekanntmachung des Hinweises auf die Patenterteilung: **04.09.2002**
(21) Anmeldenummer: 99955859.6
(22) Anmeldetag: 20.10.1999
(51) Int. Cl.: B01J 2/16, C11D 11/00, C11D 3/12

(54) **POLYMER-GRANULATE DURCH WIRBELSCHICHTGRANULATION**
POLYMER GRANULES PRODUCED BY FLUIDIZED BED GRANULATION
GRANULES DE POLYMERE PRODUITS PAR GRANULATION EN LIT FLUIDISE

(30) Priorität: 29.10.1998 DE 19850100
(43) Veröffentlichungstag der Anmeldung: 22.08.2001
(73) Patentinhaber: Henkel Kommanditgesellschaft auf Aktien, 40589 Düsseldorf-Holthausen (DE)
(72) Erfinder: ASSMANN, Georg, D-41363 Jüchen (DE); RÄHSE, Wilfried, D-40589 Düsseldorf (DE); ARTIGA GONZALEZ, Rene-Andres, D-40589 Düsseldorf (DE); KOTTWITZ, Beatrix, D-40593 Düsseldorf (DE)
(86) Internationale Anmeldenummer: EP9907943
(87) Internationale Veröffentlichungsnummer: WO00025906

(56) Entgegenhaltungen:
- EP-A- 0 368 137
- EP-A- 0 759 463
- WO-A-94/13775
- DE-A- 1 542 307
- DE-A- 4 422 607
- US-A- 5 348 644

## Beschreibung

Die Erfindung betrifft ein Verfahren zur Herstellung von polymerhaltigen Granulaten, die sich aufgrund ihrer Löslichkeit und ihres Rieselverhaltens zum Einsatz in Waschund/oder Reinigungsmitteln eignen, Polymer-Granulate, die eine geeignete Zumischkomponente zu Wasch- und/oder Reinigungsmitteln darstellen, sowie Waschund/oder Reinigungsmittel, die solche Granulate enthalten.

Der Zusatz von Polymeren zu pulverförmigen Waschmitteln führt häufig zu einer Beeinträchtigung der Lagerfähigkeit, die Waschmittel verklumpen und verlieren ihre Rieselfähigkeit. Aus diesem Grund werden solche Polymere bevorzugt in Form von Granulaten eingesetzt. Die Herstellung und Verwendung polymerhaltiger Granulate ist dementsprechend Gegenstand zahlreicher Literaturstellen.

Die europäische Patentanmeldung EP-A-0 759 463 beschreibt Waschmittelzusammensetzungen, die aus einem Basispulver bestehen, dem nachträglich ein handelsübliches Granulat eines Polycarboxylat-Polymeren (z.B. Sokalan CP 5®) zugemischt wird. Durch die nachträgliche Zugabe des Polymeren in Granulatform wird eine Stabilisierung des Bleichsystems im Vergleich zu Mitteln, die das Polymer im Basispulver enthalten, erreicht.

Ein Zusatz für Wasch- und Reinigungsmittel, der 20 - 80 Gew.-% polymeres Polycarboxylat neben 20 - 80 Gew.-% Nitrilotriacetat enthält, wird in der Patentschrift US-4 698 174 beschrieben. Das Nitrilotriacetat dient dabei zur Verminderung der Hygroskopizität des Polycarboxylats.

Mit Zeolith-Granulaten, die auch Polycarboxylat-Polymer enthalten, befassen sich die EP-A-0 368 137und die DE-A-33 16 513. Die Granulate gemäß DE - A - 33 16 513 werden durch Sprühtrocknung hergestellt und enthalten polymere Polycarboxylate in Mengen von mindestens 5 Gew.-% zur Verringerung des Abriebs der Zeolith-Granulate. Die EP-A-0 368 137 beschreibt ein Verfahren zur Herstellung solcher Granulate, die 2 - 15 Gew.-% Polycarboxylat enthalten. Es wird zuerst eine homogene, pulvrige Mischung aus dem Zeolith und dem Polycarboxylat hergestellt, die Mischung anschließend agglomeriert und das erhaltene Agglomerat nachgetrocknet.

Die WO 94/13775 beschäftigt sich mit einem Verfahren zur Herstellung von pulverförmigen Waschmitteln mit einem Gehalt an Polyvinylpyrrolidon (PVP), wobei, zur Erhaltung der Rieselfähigkeit des Waschmittels, das PVP vollständig oder teilweise in Form eines separaten Gemischs (PVP-Konzentrat) mit anderen pulverförmigen Waschmittelbestandteilen dem pulverförmigen Waschmittel, das die übrigen Waschmittelbestandteile enthält, beigemischt wird. Das PVP-Konzentrat kann 10-50 Gew.-% PVP und bevorzugt 40-80 Gew.-% anorganische Trägersalze neben geringen Mengen Wasser enthalten. Die Herstellung dieser Konzentrate erfolgt bevorzugt durch Sprühtrocknung.

Ein Waschmitteladditiv, das 15-60 Gew.-% PVP, 5-90 Gew.-% Trägermaterial sowie 5-60 Gew.-% Salz und 0,5-30 Gew.-% Bindemittel enthält, wird in der EP-B-0 652 937 beschrieben. Hergestellt wird das Additiv durch Mischen von PVP, Träger und Salz und anschließendes Aufsprühen des Bindemittels. Der Vorteil dieses Additivs besteht darin, daß Waschmittel, die es enthalten, nicht so schnell verklumpen wie vergleichbare Mittel, denen PVP direkt zugesetzt wird, da zuerst das Trägermaterial mit dem feuchten PVP verklebt.

Einen verfärbungsinhibierenden Waschmittelzusatz der wenigstens teilweise wasserlösliche Polymerbestandteile auf Basis von N-Vinylpyrrolidon oder N-Vinylimidazol oder N-Vinyloxazolidon in Kombination mit einer kationischen Verbindung enthält und auch in Kombination mit alkalischen Waschmittelbestandteilen geruchsneutral ist, beschreibt die EP-A-0 327 927. Erhalten wird dieser Zusatz dadurch, daß man die Ausgangsstoffe miteinander vermischt und das Gemisch mit erhitzter Luft trocknet.

Mit Granulaten, die sich in Waschmitteln einsetzen lassen, beschäftigt sich auch die europäische Patentanmeldung EP-A-0 421 664. Die Granulate enthalten mindestens 10 Gew.-% Polymer sowie mindestens 20 Gew.-% einer wasserlöslichen anorganischen Komponente oder mindestens 20 Gew.-% Polymer neben mindestens 20 Gew.-% einer wasserunlöslichen anorganischen Komponente und haben ein Schüttgewicht von mindestens 700 g/l. Bevorzugte Granulate enthalten 20 bis 40 Gew.-% Polymer. Hergestellt werden diese Granulate durch Mischen einer Lösung bzw. eines Slurries des Polymeren mit der anorganischen Komponente und Granulation der Mischung unter Wärmeanwendung.

Das europäische Patent EP-B-0 658 189 beschreibt Wasch- und Reinigungsmittel, die mindestens 2 granulare Komponenten enthalten, wobei eine Komponente eine Zumischkomponente in granularer Form aus polymeren Polycarboxylaten ist. Die Polymergranulate weisen ein Schüttgewicht zwischen 350 und 850 g/l auf und werden auf übliche Weise, beispielsweise durch Trocknung von Polymerlösungen, anschließende Granulierung und ggf. Größenklassierung hergestellt. Bevorzugt ist dabei die Trocknung der Polymerlösung in einem Sprühturm oder in einer Wirbelschicht. Genaue Angaben zum Herstellungsverfahren oder zur Zusammensetzung der Polymergranulate enthält die Patentschrift jedoch nicht.

Die aus dem genannten Stand der Technik bekannten Granulate besitzen meist nur niedrige Polymergehalte oder enthalten Zusätze, die die Hygroskopizität der Compounds und damit deren Wassergehalt begrenzen sollen. Keines der bislang beschriebenen Verfahren ist allgemein zur Herstellung von Granulaten polymerer Waschmittelinhaltsstoffe geeignet, die einen hohen Polymergehalt besitzen, leicht löslich, lagerstabil und rieselfähig sind und außer Trägersubstanzen keine weiteren Zusätze enthalten.

Die Aufgabe der vorliegenden Erfindung bestand dementsprechend darin, ein Verfahren bereitzustellen, das geeignet ist, leicht lösliche, rieselfähige und trägerhaltige Granulate mit hohen Polymergehalten bereitzustellen.

Gegenstand der Erfindung ist dementsprechend ein Verfahren zur Herstellung von löslichen Polymer-Granulaten, die sich als Zusatz in Wasch- und/oder Reinigungsmitteln eignen, dadurch gekennzeichnet, daß eine wäßrige Zubereitungsform des Polymeren, die mindestens 30 Gew.-% Polymer enthält in einer runden Wirbelschicht in der über eine Luftzuführung oberhalb des Wirbelbodens eine Wirbelströmung um die senkrechte Achse der Apparatur erzeugt wird, granuliert und gleichzeitig getrocknet wird.

Diese zusätzliche Wirbelströmung um die senkrechte Achse der Wirbelschichtapparatur bewirkt eine homogene Temperaturverteilung im Wirbelschichtturm. Weiter wird der Einfluß der Düsen, die die eingesprühte Flüssigkeit möglichst fein verteilen sollen, reduziert, so daß an jeder Stelle der Wirbelschicht die Trocknung schnell und gleichmäßig erfolgt. Dadurch wird eine Qualitätsverbesserung der Granulate erreicht, die erhaltenen Körner erscheinen homogener, das Kornspektrum am Austrag ist eng und die einzelnen Teilchen sind annähernd kugelförmig.

Erreicht werden kann die Wirbelströmung erfindungsgemäß dadurch, daß Einblaskanäle oberhalb des Wirbelbodens in gleichmäßigem Abstand voneinander und in gleicher oder ungleicher Höhe über dem Wirbelboden angebracht werden. In einer bevorzugten Ausführungsform der Erfindung ist die Höhe, in der die Einblaskanäle angebracht werden, dabei abhängig von der Ruhehöhe der Schichtmasse. Die Einblaskanäle werden unterhalb der Obergrenze der Ruhehöhe der Schichtmasse angebracht, bevorzugt in maximal 50 % der Ruhehöhe und ganz besonders bevorzugt in 10 bis 30 % der Ruhehöhe der Schichtmasse.

Erfindungsgemäß erfolgt die zusätzliche Luftzufuhr über mindestens 2 solcher Einblaskanäle, bevorzugt über 4 Einblaskanäle. Unabhängig von der Anzahl werden die Kanäle alle in gleicher Höhe und in gleichmäßigem Abstand voneinander angebracht.

Wesentlich für die erzeugte Drallwirkung durch die Zuluft ist weiter der Anstellwinkel α dieser Einblaskanäle. Dabei wird der Anstellwinkel α so gemessen, daß α = 90° einer tangentialen Stellung und α = 0° einer radialen Stellung der Einblaskanäle zur runden Wirbelschicht entspricht. Erfindungsgemäß bevorzugt sind Anstellwinkel von mindestens 30° und maximal 90°, da bei Anstellwinkeln α < 30° in erster Linie Turbulenzen erzeugt werden, sich jedoch keine ringförmige Wirbelströmung ausbildet. Besonders bevorzugt sind Anstellwinkel von 30 bis 75°, wobei die besten Strömungsverhältnisse bei 45 bis 70° und ganz besonders bei 60° erreicht werden. Bei Anstellwinkeln oberhalb 75° wird eine starke Randströmung erzeugt, die dazu führt, daß klebrige Partikel über die Zentrifugalwirkung an der Wand festkleben.

In den Einblaskanälen wird die Luft bevorzugt mit 20 bis 30 m/s befördert und kann ggf. zum pneumatischen Transport von Feststoffen oder Keimmaterial in die Wirbelschicht genutzt werden. Der Anteil dieser zusätzlichen Luftzufuhr an der gesamten Trocknungsluft beträgt dabei zwischen 3 und 30 %, bevorzugt zwischen 5 und 15 %, wobei die über die Einblaskanäle zugeführte Luft in einer bevorzugten Ausführungsform die gleiche Temperatur besitzt, wie die über den Wirbelboden zugeführte Luft. Werden die Einblaskanäle zur pneumatischen Förderung von Feststoffen verwendet, so kann es jedoch auch bevorzugt sein, daß hier Kaltluft zugeführt wird.

Die in dem erfindungsgemäßen Verfahren eingesetzten Trägermaterialien können anorganischer und/oder organischer Natur sein.

Ein solcher anorganischer Träger ist feinkristalliner, synthetischer und gebundenes Wasser enthaltender Zeolith, vorzugsweise Zeolith A, X und/oder P. Geeignet sind jedoch auch Mischungen aus A, X und/oder P. Als Zeolith P wird beispielsweise Zeolith MAP (Doucil A24 ®; Handelsprodukt der Firma Crosfield) besonders bevorzugt. Von besonderem Interesse ist auch ein cokristallisiertes NatriumlKalium-Aluminiumsilicat aus Zeolith A und Zeolith X, welches als VEGOBOND AX® (Handelsprodukt der Firma Condea Augusta S.p.A.) im Handel erhältlich ist. Der Zeolith kann als sprühgetrocknetes Pulver oder auch als ungetrocknete, von ihrer Herstellung noch feuchte, stabitisierte Suspension zum Einsatz kommen. Für den Fall, daß der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C₁₂-C₁₈-Fettalkoholen mit 2 bis 5 Ethylenoxidgruppen, C₁₂-C₁₄-Fettalkoholen mit 4 bis 5 Ethylenoxidgruppen oder ethoxylierten Isotridecanolen. Geeignete Zeolithe weisen eine mittlere Teilchengröße von weniger als 10 µm (Volumenverteilung; Meßmethode: Coulter Counter) auf und enthalten vorzugsweise 10 bis 22 Gew.-%, insbesondere 15 bis 22 Gew.-% an gebundenem Wasser.

Andere geeignete Träger sind beispielsweise amorphe Alkalisilicate (sog. Wassergläser) oder kristalline Schichtsilicate, Natriumcarbonat, Natriumbicarbonat, Natriumsulfat sowie Trinatriumcitrat. Mögliche Träger sind auch Gemische der o. g. Trägersubstanzen. Bevorzugte Trägersubstanzen sind anorganische Träger, insbesondere Natriumcarbonat, Natriumsulfat oder Zeolithe.

Die nach dem Verfahren hergestellten Polymer-Granulate weisen, bezogen auf das fertige Granulat, Trägermaterialgehalte unterhalb 50 Gew.-% auf. Da erfindungsgemäß hochkonzentrierte Polymer-Granulate bevorzugt sind, sind Trägermaterialgehalte von unterhalb 40 Gew.-%, insbesondere unterhalb 25 Gew.-%, besonders bevorzugt.

Die im erfindungsgemäßen Verfahren eingesetzte Wirbelschichtkammer ist rund, wobei die Apparatur zylinderförmig sein kann, d.h. einen in der Höhe konstanten Durchmesser haben kann. Erfindungsgemäß sind jedoch solche Wirbelschichtkammern, bei denen die Wirbelzone konisch, nach oben erweitert ausgelegt ist und erst die daran anschließende Beruhigungszone nach einem konischen Übergangsstück zylinderförmig ist. Das Verfahren kann unabhängig von der Form der Wirbelschichtapparatur batchweise oder kontinuierlich durchgeführt werden, im Sinne der vorliegenden Erfindung ist jedoch die kontinuierliche Verfahrensführung bevorzugt.

Zur Herstellung der Polymer-Granulate wird nach dem erfindungsgemäßen Verfahren die Polymer-Lösung über eine Ein- oder Mehrstoffdüse oder über mehrere Düsen in die Wirbelschicht eingebracht. Die Trägerkomponente, sowie gegebenenfalls vorhandene weitere Feststoffe, werden entweder pneumatisch über Blasleitungen eingestaubt, wobei die Zugabe entweder vor der Verdüsung der Polymer-Lösung oder gleichzeitig mit dieser erfolgt, oder als Lösung bzw. Suspension im Gemisch mit der Polymer-Lösung zugegeben, wobei die Mischung dieser flüssigen Bestandteile entweder vor der Verdüsung oder unmittelbar in der Düse erfolgt. Dabei kann die Anordnung der Düse bzw. der Düsen und die Sprührichtung beliebig sein, solange eine im wesentlichen gleichmäßige Verteilung der flüssigen Komponenten in der Wirbelschicht erreicht wird. In einer erfindungsgemäß bevorzugten Ausführungsform wird der Träger vor der Verdüsung mit der Polymer-Lösung gemischt und die Lösung bzw. der Slurry durch eine Düse in die Wirbelschicht eingeblasen.

Bevorzugt eingesetzte Wirbelschicht-Apparate besitzen Bodenplatten mit Abmessungen von mindestens 0,4 m. Insbesondere sind Wirbelschicht-Apparate bevorzugt, die eine Bodenplatte mit einem Durchmesser zwischen 0,4 und 5 m, beispielsweise 1,2 m oder 2,5 m besitzen. Es sind jedoch auch Wirbelschicht-Apparate geeignet, die eine Bodenplatte mit einem größeren Durchmesser als 5 m aufweisen. Als Bodenplatte kann eine Lochbodenplatte oder eine Conidurplatte (Handelsprodukt der Fa. Hein & Lehmann, Bundesrepublik Deutschland), ein Drahtgewebe oder ein Kombinationsboden aus einer Lochbodenplatte mit einem Gitternetz, wie in der älteren deutschen Patentanmeldung mit Aktenzeichen 197 50 424.8 beschrieben, eingesetzt werden. Insbesondere ein Conidurboden kann dabei die Drallwirkung der zusätzlichen Luftzufuhr unterstützen.

Vorzugsweise wird das erfindungsgemäße Verfahren bei Wirbelluftgeschwindigkeiten zwischen 1 und 8 m/s und insbesondere zwischen 1,2 und 5,5 m/s durchgeführt. Der Austrag der Granulate aus der Wirbelschicht erfolgt vorteilhafterweise über eine Größenklassierung der Granulate. Diese Klassierung kann beispielsweise mit einer Siebvorrichtung oder durch einen entgegengeführten Luftstrom (Sichterluft) erfolgen, der so reguliert wird, daß erst Teilchen ab einer bestimmten Teilchengröße aus der Wirbelschicht entfernt und kleinere Teilchen in der Wirbelschicht zurückgehalten werden. In einer bevorzugten Ausführungsform setzt sich die von unten einströmende Luft aus der beheizten oder unbeheizten Sichterluft und der beheizten Bodenluft zusammen. Die Bodenlufttemperatur liegt dabei vorzugsweise zwischen 80 und 400°C, insbesondere zwischen 90 und 350°C, wobei Wirbellufttemperaturen oberhalb 150°C im vorliegenden Verfahren besonders günstig sind, da solche hohe Temperaturen die Trocknung beschleunigen. Die Wirbelluft kühlt sich durch Wärmeverluste und durch die Verdampfungswärme der Bestandteile des Lösungsmittels ab. In einer besonders bevorzugten Ausführungsform beträgt die Temperatur der Wirbelluft etwa 5 cm oberhalb der Bodenplatte 60 bis 120°C, vorzugsweise 70 bis 100°C. Die Luftaustrittstemperatur liegt vorzugsweise zwischen 60 und 120°C, insbesondere unterhalb 100°C.

Bei der Wirbelschichtgranulation läßt sich der Wassergehalt der Produkte nahezu beliebig einstellen. Im erfindungsgemäßen Verfahren erfolgt grundsätzlich gleichzeitig mit der Granulation in der Wirbelschicht eine Trocknung. In einer bevorzugten Ausführungsform der Erfindung führt die Trocknung dazu, daß der Polymergehalt der Granulate, bezogen auf deren Gesamtgewicht, höher liegt, als der Polymergehalt der eingesetzten Lösung. In einer besonders bevorzugten Ausführungsform werden dabei Granulate erhalten, deren Wassergehalt mindestens 5 Gew.-%, bevorzugt mindestens 7 Gew.-% beträgt.

Erfolgt der Austrag aus der Wirbelschicht, wie in der EP-B-0 603 207 beschrieben, gegen einen Sichterluftstrom, so werden durch diese Klassierung staubfreie Granulate erhalten, d.h. die Korngrößen der Teilchen liegen über 0,1 mm. Erfindungsgemäß bevorzugte Granulate haben einen d₅₀-Wert zwischen 0,4 und 2,5 mm. In einer besonders bevorzugten Ausführungsform - bei feinen, engen Korngrößenverteilungen - wird der Kornanteil, der größer 1,6 mm ist, zurückgeführt. Dieser Grobkomanteil kann entweder nach Mahlen der Wirbelschicht als feste Komponente zugesetzt werden oder er wird erneut gelöst und in die Wirbelschicht eingesprüht.

Bei der erfindungsgemäßen Granulation kann zur Aufrechterhaltung des Wirbelgranulationsprozesses kontinuierlich festes Trägermaterial als Bepuderungsmittel, vorzugsweise Zeolith, besonders bevorzugt Zeolith A oder P, in die Wirbelschicht eingebracht werden. Diese Bepuderungsmittel vermindern bei der Granulation die Klebrigkeit der feuchten Granulatkörner zusätzlich und fördern somit die Verwirbelung und die Trocknung zum gewünschten Produkt. Die Teilchengröße des Bepuderungsmittel liegt dabei unter 100 µm und die so erhaltenenen Granulate enthalten dann zwischen 1 und 4 Gew.-% des Bepuderungsmittels. Für die Herstellung von Granulaten nach dem erfindungsgemäßen Verfahren kann diese Variante vorteilhaft sein, sie ist zur Ausführung der Erfindung jedoch nicht zwingend erforderlich.

Zur Verarbeitung in diesem Verfahren geeignet sind alle löslichen Polymere, die typische Waschmittelzusätze darstellen. Die Polymere werden erfindungsgemäß bevorzugt in Form wäßriger Lösungen, vorzugsweise mit einem Polymergehalt von 30 bis 60 Gew.-%, besonders bevorzugt 35 bis 45 Gew.-% eingesetzt.

In einer bevorzugten Ausführungsform sieht die Erfindung vor, daß wäßrige polymere Polycarboxylat-Lösungen eingesetzt werden. Polymere Polycarboxylate im Sinne der Erfindung sind dabei Homo- oder Copolymere der Acryl-, Methacryl- oder Maleinsäure, ferner Copolymere dieser Säuren mit Vinylethem, wie Vinylmethylether bzw. Vinylethylether, Vinylestem, wie Vinylacetat oder Vinylpropionat, Acrylamid, Methacrylamid sowie Ethylen, Propylen oder Styrol, sowie die wasserlöslichen Salze dieser Polymere. Insbesondere bevorzugt sind die Natriumsalze solcher homo- oder copolymeren Polycarbonsäuren. Weist eine der Komponenten eines Copolymeren keine Säurefunktion auf, so beträgt deren Anteil am Polymeren im Interesse einer guten Wasserlöslichkeit nicht mehr als 50 Mol-%, vorzugsweise weniger als 30 Mol-%. Als besonders geeignet haben sich Homo- und Copolymere von Acryl-, Methacryl- und Maleinsäure erwiesen, ganz besonders geeignet sind Copolymere der Acrylsäure mit Maleinsäure, die 50 bis 90 Gew.-% Acrylsäure und 50 bis 10 Gew.-% Maleinsäure enthalten. Bevorzugt sind weiter Polycarboxylat-Polymere mit einem Molgewicht zwischen 500 und 150.000 g/mol, besonders bevorzugt zwischen 500 und 100.000 g/mol (gemessen gegen Polystyrol als Standard).

In einer weiteren bevorzugten Ausführungsform der Erfindung werden als Polymere Polyvinylpyrrolidone mit einem Molgewicht zwischen 1000 und 200.000 g/mol, bevorzugt zwischen 1000 und 100.000 g/mol, eingesetzt. Dabei sind mit Polyvinylpyrrolidonen (PVP) solche wasserlöslichen Polymere gemeint, die bei der Polymerisation von substituierten oder unsubstituierten Vinylpyrrolidon-Monomeren entstehen. Dabei kann es sich sowohl um Homopolymere als auch um Copolymere handeln, bei denen mindestens eines der Monomere ein Vinylpyrrolidon ist und der Vinylpyrrolidon-Anteil am Copolymeren mindestens 50 Mol.-% ausmacht. Geeignete weitere Comonomere sind beispielsweise Acrylnitril oder Maleinsäureanhydrid.

Neben diesen Polymeren können in den erfindungsgemäßen Granulaten auch Polymere natürlichen Ursprungs eingesetzt werden. Dabei handelt es sich beispielsweise um Oligomere bzw. Polymere von Kohlenhydraten, die durch partielle Hydrolyse von Stärken erhalten werden können. Die Hydrolyse kann nach üblichen, beispielsweise säure- oder enzymkatalysierten Verfahren durchgeführt werden. Vorzugsweise handelt es sich um Hydrolyseprodukte mit mittleren Molmassen im Bereich von 400 bis 500000. Dabei ist ein Polysaccharid mit einem Dextrose-Äquivalent (DE) im Bereich von 0,5 bis 40, insbesondere von 2 bis 30 bevorzugt, wobei DE ein gebräuchliches Maß für die reduzierende Wirkung eines Polysaccharids im Vergleich zu Dextrose, welche ein DE von 100 besitzt, ist. Brauchbar sind sowohl Maltodextrine mit einem DE zwischen 3 und 20 und Trockenglucosesirupe mit einem DE zwischen 20 und 37 als auch sogenannte Gelbdextrine und Weißdextrine mit höheren Molmassen im Bereich von 2000 bis 30000. Ein bevorzugtes Dextrin ist in der britischen Patentanmeldung 94 19 091 beschrieben. Bei den oxidierten Derivaten derartiger Dextrine handelt es sich um deren Umsetzungsprodukte mit Oxidationsmitteln, welche in der Lage sind, mindestens eine Alkoholfunktion des Saccharidrings zur Carbonsäurefunktion zu oxidieren. Derartige oxidierte Dextrine und Verfahren ihrer Herstellung sind beispielsweise aus den europäischen Patentanmeldungen EP-A-0 232 202, EP-A-0 427 349, EP-A-0 472 042 und EP-A-0 542 496 sowie den internationalen Patentanmeldungen WO-A-92/18542, WO-A-93/08251, WO-A-93/16110, WO-A-94/28030, WO-A-95/07303, WO-A-95/12619 und WO-A-95/20608 bekannt. Ebenfalls geeignet ist ein oxidiertes Oligosaccharid gemäß der deutschen Patentanmeldung DE-A-196 00 018. Ein an C₆ des Saccharidrings oxidiertes Produkt kann besonders vorteilhaft sein.

Dabei werden derartige Dextrine in den Granulaten in einer bevorzugten Ausführungsform gemeinsam mit polymeren Polycarboxylaten eingearbeitet. Das Verfahren wird dabei bevorzugt so geführt, daß das Verhältnis Dextrin zu polymerem Polycarboxylat im Produkt 4 zu 1 bis 1 zu 2 beträgt. Hierbei kann entweder bereits eine homogene Lösung aus den beiden Polymeren in den Granulationsraum eingeprüht werden oder das Dextrin in fester Form vorgelegt und eine Lösung des Polycarboxylats eingesprüht werden. Bei beiden Ausführungsformen neigt das polymere Polycarboxylat dazu, das Dextrin im Granulat zu umhüllen, wobei dieser Effekt natürlich beim Vorlegen des festen Dextrins besonders ausgeprägt ist. Genau dieser Effekt der Umhüllung des Dextrins durch das Polycarboxylat macht die Granulation des Dextrins erst möglich, da die Dextrine alleine beim Trocknen sehr klebrig werden und verklumpen. Weiter führt die Umhüllung zu einem Schutz der Dextrine vor thermischer Belastung während der Granulation.

Ein weiterer Gegenstand der Erfindung sind lösliche Polymer-Granulate, die sich als Zusatz in Wasch- und/oder Reinigungsmittel eignen, kugelförmig sind und 50 bis 95 Gew.-% Polymer sowie mindestens eine Zumischkomponente aus der Gruppe der anorganischen Trägermaterialien, bevorzugt Natriumsulfat, Natriumcarbonat, Natriumcitrat oder Zeolithe, enthalten und der Gehalt an Trägermaterial im Granulat unterhalb 40 Gew.-%, bevorzugt unter 25 Gew.-%, liegt.

Geeignete Polymere für diese löslichen Polymer-Granulate sind dabei alle Polymere, die typische Waschmittelzusätze darstellen. In einer bevorzugten Ausführungsform sieht die Erfindung vor, daß polymere Polycarboxylate eingesetzt werden. Polymere Polycarboxylate im Sinne der Erfindung sind dabei Homo- oder Copolymere der Acryl-, Methacryloder Maleinsäure, femer Copolymere dieser Säuren mit Vinylethem, wie Vinylmethylether bzw. Vinylethylether, Vinylestem, wie Vinylacetat oder Vinylpropionat, Acrylamid, Methacrylamid sowie Ethylen, Propylen oder Styrol, sowie die wasserlöslichen Salze dieser Polymere. Insbesondere bevorzugt sind die Natriumsalze solcher homo- oder copolymeren Polycarbonsäuren. Weist eine der Komponenten eines Copolymeren keine Säurefunktion auf, so beträgt deren Anteil am Polymeren im Interesse einer guten Wasserlöslichkeit nicht mehr als 50 Mol-%, vorzugsweise weniger als 30 Mol-%. Als besonders geeignet haben sich Homo- und Copolymere von Acryl-, Methacryl- und Maleinsäure erwiesen, ganz besonders geeignet sind Copolymere der Acrylsäure mit Maleinsäure, die 50 bis 90 Gew.-% Acrylsäure und 50 bis 10 Gew.-% Maleinsäure enthalten. Bevorzugt sind weiter Polycarboxylat-Polymere mit einem Molgewicht zwischen 500 und 150.000 g/mol, besonders bevorzugt zwischen 500 und 100.000 g/mol.

In einer weiteren bevorzugten Ausführungsform der Erfindung werden die Polymere von Polyvinylpyrrolidonen mit einem Molgewicht zwischen 1000 und 200.000 g/mol, bevorzugt zwischen 1000 und 100.000 g/mol, gebildet. Dabei sind mit Polyvinylpyrrolidonen (PVP) solche wasserlöslichen Polymere gemeint, die bei der Polymerisation von substituierten oder unsubstituierten Vinylpyrrolidon-Monomeren entstehen. Dabei kann es sich sowohl um Homopolymere als auch um Copolymere handeln, bei denen mindestens eines der Monomere ein Vinylpyrrolidon ist und der Vinylpyrrolidon-Anteil am Copolymeren mindestens 50 Mol.-% ausmacht. Geeignete weitere Comonomere sind beispielsweise Acrylnitril oder Maleinsäureanhydrid.

Neben diesen Polymeren können in den erfindungsgemäßen Granulaten auch Polymere natürlichen Ursprungs eingesetzt werden. Dabei handelt es sich beispielsweise um Oligomere bzw. Polymere von Kohlenhydraten, die durch partielle Hydrolyse von Stärken erhalten werden können. Die Hydrolyse kann nach üblichen, beispielsweise säure- oder enzymkatalysierten Verfahren durchgeführt werden. Vorzugsweise handelt es sich um Hydrolyseprodukte mit mittleren Molmassen im Bereich von 400 bis 500000. Dabei ist ein Polysaccharid mit einem Dextrose-Äquivalent (DE) im Bereich von 0,5 bis 40, insbesondere von 2 bis 30 bevorzugt, wobei DE ein gebräuchliches Maß für die reduzierende Wirkung eines Polysaccharids im Vergleich zu Dextrose, welche ein DE von 100 besitzt, ist. Brauchbar sind sowohl Maltodextrine mit einem DE zwischen 3 und 20 und Trockenglucosesirupe mit einem DE zwischen 20 und 37 als auch sogenannte Gelbdextrine und Weißdextrine mit höheren Molmassen im Bereich von 2000 bis 30000. Ein bevorzugtes Dextrin ist in der britischen Patentanmeldung 94 19 091 beschrieben. Bei den oxidierten Derivaten derartiger Dextrine handelt es sich um deren Umsetzungsprodukte mit Oxidationsmitteln, welche in der Lage sind, mindestens eine Alkoholfunktion des Saccharidrings zur Carbonsäurefunktion zu oxidieren. Derartige oxidierte Dextrine und Verfahren ihrer Herstellung sind beispielsweise aus den europäischen Patentanmeldungen EP-A-0 232 202, EP-A-0 427 349, EP-A-0 472 042 und EP-A-0 542 496 sowie den internationalen Patentanmeldungen WO-A-92/18542, WO-A-93/08251, WO-A-93/16110, WO-A-94/28030, WO-A-95/07303, WO-A-95/12619 und WO-A-95/20608 bekannt. Ebenfalls geeignet ist ein oxidiertes Oligosaccharid gemäß der deutschen Patentanmeldung DE-A-196 00 018. Ein an C₆ des Saccharidrings oxidiertes Produkt kann besonders vorteilhaft sein.

Die Granulate weisen einen Polymergehalt zwischen 50 und 95 Gew.-% auf. Im Sinne der Erfindung besonders bevorzugt sind Granulate die Polymere im Bereich von 75 - 90 Gew.-% enthalten. Enthalten die Granulate Dextrine, so liegen diese Dextrine bevorzugt gemeinsam mit polymeren Polycarboxylaten in den Granulaten vor, wobei das Verhältnis Dextrin zu polymerem Polycarboxylat im Granulat bevorzugt in dem Bereich von 4 : 1 bis 1 : 2 liegt. in diesen Granulaten umhüllt das polymere Polycarboxylat das Dextrin und bildet so eine Schicht um das Dextrin, die es vor chemischen und thermischen Belastungen schützt.

Die erfindungsgemäßen Polymergranulate enthalten weiter eine Zumischkomponente. Im Sinne der Erfindung werden als Zumischkomponente Substanzen eingesetzt, die sich als Trägermaterial eignen.

Ein solcher anorganischer Träger ist feinkristalliner, synthetischer und gebundenes Wasser enthaltender Zeolith, vorzugsweise Zeolith A, X und/oder P. Geeignet sind jedoch auch Mischungen aus A, X undloder P. Als Zeolith P wird beispielsweise Zeolith MAP® (Handelsprodukt der Firma Crosfield) besonders bevorzugt. Von besonderem Interesse ist auch ein cokristaltisiertes NatriumlKalium-Aluminiumsilicat aus Zeolith A und Zeolith X, welches als VEGOBOND AX® (Handelsprodukt der Firma Condea Augusta S.p.A.) im Handel erhältlich ist. Der Zeolith kann als sprühgetrocknetes Pulver oder auch als ungetrocknete, von ihrer Herstellung noch feuchte, stabilisierte Suspension zum Einsatz kommen. Für den Fall, daß der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C₁₂-C₁₈-Fettalkoholen mit 2 bis 5 Ethylenoxidgruppen, C₁₂-C₁₄-Fettalkoholen mit 4 bis 5 Ethylenoxidgruppen oder ethoxylierten Isotridecanolen. Geeignete Zeolithe weisen eine mittlere Teilchengröße von weniger als 10 µm (Volumenverteilung; Meßmethode: Coulter Counter) auf und enthalten vorzugsweise 10 bis 22 Gew.-%, insbesondere 15 bis 22 Gew.-% an gebundenem Wasser.

Andere geeignete Träger sind beispielsweise amorphe Alkalisilicate (sog. Wassergläser) oder kristalline Schichtsilicate, Natriumcarbonat, Natriumbicarbonat, Natriumsulfat sowie Trinatriumcitrat. Mögliche Träger sind auch Gemische der o. g. Trägersubstanzen. Bevorzugte Trägersubstanzen sind anorganische Träger, insbesondere Natriumcarbonat, Natriumsulfat oder Zeolithe.

Die Polymer-Granulate weisen, bezogen auf das fertige Granulat, Trägermaterialgehalte unterhalb 40 Gew.-%, bevorzugt unterhalb 25 Gew.-%, auf.

Kugelförmig im Sinne der Erfindung sind solche Granulate, die bereits bei bloßer Betrachtung des Produktes eine Oberfläche ohne signifikante Erhebung zeigen und beim Betrachten in allen Raumrichtungen gleiche Ausdehnungen aufweisen. Bei der mikroskopischen Untersuchung der erfindungsgemäßen Granulate bestätigt sich dieser Eindruck. In bevorzugten Granulaten weichen die drei aufeinander senkrecht stehenden Durchmesser der Granulat-Teilchen um weniger als 30 % der Ausdehnung des größten Durchmessers voneinander ab, erfindungsgemäß besonders bevorzugt sind solche kugelförmigen Granulate, bei denen die Abweichung der drei aufeinander stehenden Durchmesser kleiner 20 % ist.

Ein weiterer Gegenstand der vorliegenden Erfindung sind Wasch- oder Reinigungsmittel, die neben tensidhaltigen Bestandteilen mindestens ein erfindungsgemäßes lösliches Polymer-Granulat bzw. ein Polymer-Granulat, das Produkt des erfindungsgemäßen Verfahrens ist, enthalten.

Die erfindungsgemäßen Wasch- und Reinigungsmittel, die als Granulate, pulver- oder tablettenförmige Feststoffe oder sonstige Formkörper vorliegen können, können außer den genannten Compounds im Prinzip alle bekannten und in derartigen Mitteln üblichen Inhaltsstoffe enthalten. Bevorzugte Mittel im Sinne der Erfindung sind granulare Mittel, insbesondere solche, die durch Mischen verschiedener Granulate von Wasch- und/oder Reinigungsmittelkomponenten entstehen.

Als weitere Inhaltsstoffe der erfindungsgemäßen Waschmittel können in erster Linie anionische, nichtionische, kationische, amphotere undloder zwitterionische Tenside genannt werden.

Geeignete anionische Tenside sind insbesondere Seifen und solche, die Sulfat- oder Sulfonat-Gruppen enthalten. Als Tenside vom Sulfonat-Typ kommen vorzugsweise C₉-C₁₃-Alkylbenzolsulfonate, Olefinsulfonate, das heißt Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂-C₁₈-Alkanen beispielsweise durch Sulfochlorierung oder Sulfoxidation mit anschließender Hydrolyse beziehungsweise Neutralisation gewonnen werden. Geeignet sind auch die Ester von α-Sulfofettsäuren (Estersulfonate), zum Beispiel die α-sulfonierten Methylester der hydrierten Kokos-, Palmkem- oder Talgfettsäuren, die durch α-Sulfonierung der Methylester von Fettsäuren pflanzlichen und/oder tierischen Ursprungs mit 8 bis 20 C-Atomen im Fettsäuremolekül und nachfolgende Neutralisation zu wasserlöslichen Mono-Salzen hergestellt werden, in Betracht. Vorzugsweise handelt es sich hierbei um die α-sulfonierten Ester der hydrierten Kokos-, Palm-, Palmkem- oder Talgfettsäuren, wobei auch Sulfonierungsprodukte von ungesättigten Fettsäuren, beispielsweise Ölsäure, in geringen Mengen, vorzugsweise in Mengen nicht oberhalb etwa 2 bis 3 Gew.-%, vorhanden sein können. Insbesondere sind α-Sulfofettsäurealkylester bevorzugt, die eine Alkylkette mit nicht mehr als 4 C-Atomen in der Estergruppe aufweisen, beispielsweise Methylester, Ethylester, Propylester und Butylester. Mit besonderem Vorteil werden die Methylester der α-Sulfofettsäuren (MES), aber auch deren verseifte Disalze eingesetzt.

Weitere geeignete Aniontenside sind sulfierte Fettsäureglycerinester, welche Mono-, Diund Triester sowie deren Gemische darstellen, wie sie bei der Herstellung durch Veresterung durch ein Monoglycerin mit 1 bis 3 Mol Fettsäure oder bei der Umesterung von Triglyceriden mit 0,3 bis 2 Mol Glycerin erhalten werden.

Als Alk(en)ylsulfate werden die Alkali- und insbesondere die Natriumsalze der Schwefelsäurehalbester der C₁₂-C₁₈-Fettalkohole beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlänge bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind C₁₂-C₁₆-Alkylsulfate und C₁₂-C₁₅-Alkylsulfate sowie C₁₄-C₁₅-Alkylsulfate insbesondere bevorzugt. Auch 2,3-Alkylsulfate, welche beispielsweise gemäß den US-amerikanischen Patentschriften US 3 234 258 oder US 5 075 041 hergestellt werden und als Handelsprodukte der Shell Oil Company unter dem Namen DAN® erhalten werden können, sind geeignete Aniontenside.

Geeignet sind auch die Schwefelsäuremonoester der mit 1 bis 6 Mol Ethylenoxid ethoxylierten geradkettigen oder verzweigten C₇-C₂₁-Alkohole, wie 2-Methylverzweigte C₉-C₁₁-Alkohole mit im Durchschnitt 3,5 Mol Ethylenoxid (EO) oder C₁₂-C₁₈-Fettalkohole mit 1 bis 4 EO. Sie werden in Wasch- und Reinigungsmitteln aufgrund ihres hohen Schaumverhaltens normalerweise nur in relativ geringen Mengen, beispielsweise in Mengen von 1 bis 5 Gew.-%, eingesetzt.

Zu den bevorzugten Aniontensiden gehören auch die Salze der Alkylsulfobemsteinsäure, die auch als Sulfosuccinate oder als Sulfobemsteinsäureester bezeichnet werden, und die Monoester undloder Diester der Sulfobemsteinsäure mit Alkoholen, vorzugsweise Fettalkoholen und insbesondere ethoxylierten Fettalkoholen darstellen. Bevorzugte Sulfosuccinate enthalten C₈- bis C₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen. Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbemsteinsäure mit vorzugsweise 8 bis 18 Kohlenstoffatomen in der Alk(en)ylkette oder deren Salze einzusetzen.

Als weitere anionische Tenside kommen Fettsäure-Derivate von Aminosäuren, beispielsweise von N-Methyltaurin (Tauride) und/oder von N-Methylglycin (Sarkoside) in Betracht. Insbesondere bevorzugt sind dabei die Sarkoside beziehungsweise die Sarkosinate und hier vor allem Sarkosinate von höheren und gegebenenfalls einfach oder mehrfach ungesättigten Fettsäuren wie Oleylsarkosinat.

Als weitere anionische Tenside kommen insbesondere Seifen, beispielsweise in Mengen von 0,2 Gew.-% bis 5 Gew.-%, in Betracht. Geeignet sind insbesondere gesättigte Fettsäureseifen, wie die Salze der Laurinsäure, Myristinsäure, Palmitinsäure, Stearinsäure, hydrierten Erucasäure und Behensäure sowie insbesondere aus natürlichen Fettsäuren, zum Beispiel Kokos-, Palmkern- oder Talgfettsäuren, abgeleitete Seifengemische.

Die anionischen Tenside, einschließlich der Seifen, können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor. Anionische Tenside sind in erfindungsgemäßen Waschmitteln vorzugsweise in Mengen von 1 Gew.-% bis 35 Gew.-% und insbesondere in Mengen von 5 Gew.-% bis 30 Gew.-% enthalten.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann beziehungsweise lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂-C₁₄-Alkohole mit 3 EO oder 4 EO, C₉-C₁₁-Alkohole mit 7 EO, C₁₃-C₁₅-Alkohole mit 3 EO, 5 EO, 7 EO oder 8 EO, C₁₂-C₁₈-Alkohole mit 3 EO, 5 EO oder 7 EO und Mischungen aus diesen, wie Mischungen aus C₁₂-C₁₄-Alkohol mit 3 EO und C₁₂-C₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind (Talg-) Fettalkohole mit 14 EO, 16 EO, 20 EO, 25 EO, 30 EO oder 40 EO.

Zu den nichtionischen Tensiden zählen auch Alkylglykoside der allgemeinen Formel RO(G)ₓ, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl - die als analytisch zu bestimmende Größe auch gebrochene Werte annehmen kann - zwischen 1 und 10; vorzugsweise liegt x bei 1,2 bis 1,4.

Ebenfalls geeignet sind Polyhydroxyfettsäureamide der Formel (I), in der R¹CO für einen aliphatischen Acylrest mit 6 bis 22 Kohlenstoffatomen, R² für Wasserstoff, einen Alkytoder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht: 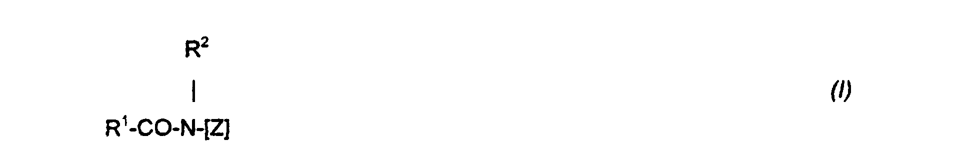 Vorzugsweise leiten sich die Polyhydroxyfettsäureamide von reduzierenden Zuckern mit 5 oder 6 Kohlenstoffatomen, insbesondere von der Glucose ab. Zur Gruppe der Polyhydroxyfettsäureamide gehören auch Verbindungen der Formel (II), 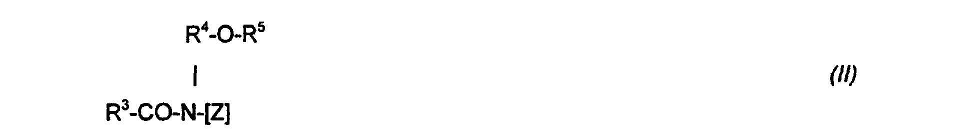 in der R³ für einen linearen oder verzweigten Alkyl- oder Alkenylrest mit 7 bis 12 Kohlenstoffatomen, R⁴ für einen linearen, verzweigten oder cyclischen Alkylenrest oder einen Arylenrest mit 2 bis 8 Kohlenstoffatomen und R⁵ für einen linearen, verzweigten oder cyclischen Alkylrest oder einen Arylrest oder einen Oxy-Alkylrest mit 1 bis 8 Kohlenstoffatomen steht, wobei C₁-C₄-Alkyl- oder Phenylreste bevorzugt sind, und [Z] für einen linearen Polyhydroxyalkylrest, dessen Alkylkette mit mindestens zwei Hydroxylgruppen substituiert ist, oder alkoxylierte, vorzugsweise ethoxylierte oder propoxylierte Derivate dieses Restes steht. [Z] wird auch hier vorzugsweise durch reduktive Aminierung eines Zuckers wie Glucose, Fructose, Maltose, Lactose, Galactose, Mannose oder Xylose erhalten. Die N-Alkoxy- oder N-Aryloxy-substituierten Verbindungen können dann beispielsweise nach der Lehre der internationalen Patentanmeldung WO 95/07331 durch Umsetzung mit Fettsäuremethylestern in Gegenwart eines Alkoxids als Katalysator in die gewünschten Polyhydroxyfettsäureamide überführt werden.

Eine weitere Klasse bevorzugt eingesetzter nichtionischer Tenside, die entweder als alleiniges nichtionisches Tensid oder in Kombination mit anderen nichtionischen Tensiden, insbesondere zusammen mit alkoxylierten Fettalkoholen und/oder Alkylglykosiden, eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind oder die vorzugsweise nach dem in der internationalen Patentanmeldung WO 90/13533 beschriebenen Verfahren hergestellt werden.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Als weitere Tenside kommen sogenannte Gemini-Tenside in Betracht. Hierunter werden im allgemeinen solche Verbindungen verstanden, die zwei hydrophile Gruppen pro Molekül besitzen. Diese Gruppen sind in der Regel durch einen sogenannten "Spacer" voneinander getrennt. Dieser Spacer ist in der Regel eine Kohlenstoffkette, die lang genug sein sollte, daß die hydrophilen Gruppen einen ausreichenden Abstand haben, damit sie unabhängig voneinander agieren können. Derartige Tenside zeichnen sich im allgemeinen durch eine ungewöhnlich geringe kritische Micellkonzentration und die Fähigkeit, die Oberflächenspannung des Wassers stark zu reduzieren, aus. In Ausnahmefällen werden unter dem Ausdruck Gemini-Tenside nicht nur derartig "dimere", sondern auch entsprechend "trimere" Tenside verstanden. Geeignete Gemini-Tenside sind beispielsweise sulfatierte Hydroxymischether gemäß der deutschen Patentanmeldung DE 43 21 022 oder Dimeralkohol-bis- und Trimeralkohol-tris-sulfate und -ethersulfate gemäß der deutschen Patentanmeldung DE 195 03061. Endgruppenverschlossene dimere und trimere Mischether gemäß der deutschen Patentanmeldung DE 195 13 391 zeichnen sich insbesondere durch ihre Bi- und Multifunktionalität aus. So besitzen die genannten endgruppenverschlossenen Tenside gute Netzeigenschaften und sind dabei schaumarm, so daß sie sich insbesondere für den Einsatz in maschinellen Wasch- oder Reinigungsverfahren eignen. Eingesetzt werden können aber auch Gemini-Polyhydroxyfettsäureamide oder Poly-Polyhydroxyfettsäureamide, wie sie in den internationalen Patentanmeldungen WO 95/19953, WO 95/19954 und WO 95/19955 beschrieben werden.

Die erfindungsgemäßen Waschmittel enthalten weiter ein Buildersystem, bestehend aus mindestens einem organischen und/oder anorganischen Builder. Zu den geeigneten organischen Buildersubstanzen zählen, neben den erfindungsgemäßen polymeren Polycarboxylaten, beispielsweise die in Form ihrer Natriumsalze einsetzbaren Polycarbonsäuren, wie Citronensäure, Adipinsäure, Bernsteinsäure, Glutarsäure, Weinsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bemsteinsäure, Glutarsäure, Weinsäure, Zuckersäuren und Mischungen aus diesen. Auch die Säuren an sich können eingesetzt werden. Die Säuren besitzen neben ihrer Builderwirkung typischerweise auch die Eigenschaft einer Säuerungskomponente und dienen somit auch zur Einstellung eines niedrigeren und milderen pH-Wertes von Wasch- oder Reinigungsmitteln. Insbesondere sind hierbei Citronensäure, Bernsteinsäure, Glutarsäure, Adipinsäure, Gluconsäure und beliebige Mischungen aus diesen zu nennen. Weitere geeignete organische Buildersubstanzen sind Dextrine, die bevorzugt in Form der erfindungsgemäßen Compounds eingesetzt werden und bereits weiter oben beschrieben wurden. Auch Oxydisuccinate und andere Derivate von Disuccinaten, vorzugsweise Ethylendiamindisuccinat, sind weitere geeignete Cobuilder. Besonders bevorzugt sind in diesem Zusammenhang auch Glycerindisuccinate und Glycerintrisuccinate, wie sie beispielsweise in den US-amerikanischen Patentschriften US 4 524 009, US 4 639 325, in der europäischen Patentanmeldung EP-A-0 150 930 und der japanischen Patentanmeldung JP 93/339896 beschrieben werden. Geeignete Einsatzmengen liegen in zeolithhaltigen und/oder silicathaltigen Formulierungen bei 3 bis 15 Gew.-%. Weitere brauchbare organische Cobuilder sind beispielsweise acetylierte Hydroxycarbonsäuren bzw. deren Salze, welche gegebenenfalls auch in Lactonform vorliegen können und welche mindestens 4 Kohlenstoffatome und mindestens eine Hydroxygruppe sowie maximal zwei Säuregruppen enthalten. Derartige Cobuilder werden beispielsweise in der internationalen Patentanmeldung WO-A-95/20029 beschrieben. Geeignete Builder-Substanzen sind darüber hinaus die Oxidationsprodukte von carboxylgruppenhaltigen Polyglucosanen und/oder deren wasserlöslichen Salzen, wie sie beispielsweise in der internationalen Patentanmeldung WO-A-93/08251 beschrieben werden oder deren Herstellung beispielsweise in der internationalen Patentanmeldung WO-A-93/16110 beschrieben wird. Ebenfalls geeignet sind auch oxidierte Oligosaccharide gemäß der älteren deutschen Patentanmeldung P 196 00 018.1. Ebenso sind als weitere bevorzugte Buildersubstanzen polymere Aminodicarbonsäuren, deren Salze oder deren Vorläufersubstanzen zu nennen. Besonders bevorzugt sind Polyasparaginsäuren bzw. deren Salze und Derivate, von denen in der deutschen Patentanmeldung P 195 40 086.0 offenbart wird, daß sie neben Cobuilder-Eigenschaften auch eine bleichstabilisierende Wirkung aufweisen. Weiterhin sind als Buildersubstanzen Polyacetale geeignet, welche durch Umsetzung von Dialdehyden mit Polyolcarbonsäuren, welche 5 bis 7 C-Atome und mindestens 3 Hydroxylgruppen aufweisen, beispielsweise wie in der europäischen Patentanmeldung EP-A-0 280 223 beschrieben, erhalten werden können. Bevorzugte Polyacetale werden aus Dialdehyden wie Glyoxal, Glutaraldehyd, Terephthalaldehyd sowie deren Gemischen und aus Polyolcarbonsäuren wie Gluconsäure undloder Glucoheptonsäure erhalten.

Ein bevorzugt eingesetzter anorganischer Builder ist feinkristalliner, synthetischer und gebundenes Wasser enthaltender Zeolith, vorzugsweise Zeolith A, X und/oder P. Geeignet sind jedoch auch Mischungen aus A, X und/oder P. Als Zeolith P wird beispielsweise Zeolith MAP® (Handelsprodukt der Firma Crosfield) besonders bevorzugt. Von besonderem Interesse ist auch ein cokristallisiertes Natrium/Kalium-Aluminiumsilicat aus Zeolith A und Zeolith X, welches als VEGOBOND AX®(Handelsprodukt der Firma Condea Augusta S.p.A.) im Handel erhältlich ist. Der Zeolith kann als sprühgetrocknetes Pulver oder auch als ungetrocknete, von ihrer Herstellung noch feuchte, stabilisierte Suspension zum Einsatz kommen. Für den Fall, daß der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C₁₂-C₁₈-Fettalkoholen mit 2 bis 5 Ethylenoxidgruppen, C₁₂-C₁₄-Fettalkoholen mit 4 bis 5 Ethylenoxidgruppen oder ethoxylierten Isotridecanolen. Geeignete Zeolithe weisen eine mittlere Teilchengröße von weniger als 10 µm (Volumenverteilung; Meßmethode: Coulter Counter) auf und enthalten vorzugsweise 10 bis 22 Gew.-%, insbesondere 15 bis 22 Gew.-% an gebundenem Wasser.

Geeignete Substitute bzw. Teilsubstitute für den Zeolith sind Schichtsilicate natürlichen und synthetischen Ursprungs. Derartige Schichtsilicate sind beispielsweise aus den Patentanmeldungen DE-B-23 34 899, EP-A-0 026 529 und DE-A-35 26 405 bekannt. Ihre Verwendbarkeit ist nicht auf eine spezielle Zusammensetzung bzw. Strukturformel beschränkt. Bevorzugt sind hier jedoch Smectite, insbesondere Bentonite. Auch kristalline, schichtförmige Natriumsilicate der allgemeinen Formel NaMSiₓO₂ₓ₊₁·yH₂O, wobei M Natrium oder Wasserstoff bedeutet, x eine Zahl von 1,9 bis 4 und y eine Zahl von 0 bis 20 ist und bevorzugte Werte für x 2, 3 oder 4 sind, eigenen sich zur Substitution von Zeolithen oder Phosphaten. Derartige kristalline Schichtsilicate werden beispielsweise in der europäischen Patentanmeldung EP-A-0 164 514 beschrieben. Bevorzugte kristalline Schichtsilicate der angegebenen Formel sind solche, in denen M für Natrium steht und x die Werte 2 oder 3 annimmt. Insbesondere sind sowohl β- als auch δ-Natriumdisilicate Na₂Si₂O₅·yH₂O bevorzugt.

Zu den bevorzugten Builder-Substanzen gehören auch amorphe Natriumsilicate mit einem Modul Na₂O : SiO₂ von 1:2 bis 1:3,3, vorzugsweise von 1:2 bis 1:2,8 und insbesondere von 1:2 bis 1:2,6, welche löseverzögert sind und Sekundärwascheigenschaften aufweisen. Die Löseverzögerung gegenüber herkömmlichen amorphen Natriumsilicaten kann dabei auf verschiedene Weise, beispielsweise durch Oberflächenbehandlung, Compoundierung, Kompaktierung/Verdichtung oder durch Übertrocknung hervorgerufen worden sein. Im Rahmen dieser Erfindung wird unter dem Begriff "amorph" auch "röntgenamorph" verstanden. Dies heißt, daß die Silicate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silicatpartikel bei Elektronenbeugungsexperimenten verwaschene oder sogar scharfe Beugungsmaxima liefern. Dies ist so zu interpretieren, daß die Produkte mikrokristalline Bereiche der Größe 10 bis einige Hundert nm aufweisen, wobei Werte bis max. 50 nm und insbesondere bis max. 20 nm bevorzugt sind. Derartige sogenannte röntgenamorphe Silicate, welche ebenfalls eine Löseverzögerung gegenüber den herkömmlichen Wassergläsern aufweisen, werden beispielsweise in der deutschen Patentanmeldung DE-A- 44 00 024 beschrieben. Insbesondere bevorzugt sind verdichtetelkompaktierte amorphe Silicate, compoundierte amorphe Silicate und übertrocknete röntgenamorphe Silicate.

Selbstverständlich ist auch ein Einsatz der allgemein bekannten Phosphate als Buildersubstanzen möglich, sofern ein derartiger Einsatz nicht aus ökologischen Gründen vermieden werden sollte. Geeignet sind insbesondere die Natriumsalze der Orthophosphate, der Pyrophosphate und insbesondere der Tripolyphosphate. Ihr Gehalt im allgemeinen nicht mehr als 25 Gew.-%, vorzugsweise nicht mehr als 20 Gew.-%, jeweils bezogen auf das fertige Mittel. In einigen Fällen hat es sich gezeigt, daß insbesondere Tripolyphosphate schon in geringen Mengen bis maximal 10 Gew.-%, bezogen auf das fertige Mittel, in Kombination mit anderen Buildersubstanzen zu einer synergistischen Verbesserung des Sekundärwaschvermögens führen.

Unter den als Bleichmittel dienenden, in Wasser H₂O₂ liefemden Verbindungen haben Natriumperboratmonohdrat bzw. -tetrahydrat und Natriumpercarbonat besondere Bedeutung. Weitere brauchbare Bleichmittel sind beispielsweise Peroxypyrophosphate, Citratperhydrate sowie H₂O₂ liefernde persaure Salze oder Persäuren, wie Perbenzoate, Peroxophthalate, Diperazelainsäure, Phthaloiminopersäure oder Diperdodecandisäure. Der Gehalt der Mittel an Bleichmitteln beträgt 0 bis 30 Gew.-% und insbesondere 5 bis 25 Gew.-%, wobei vorteilhafterweise Perboratmonohydrat oder Percarbonat eingesetzt wird.

Um beim Waschen bei Temperaturen von 60 °C und darunter eine verbesserte Bleichwirkung zu erreichen, können Bleichaktivatoren in die Präparate eingearbeitet werden. Beispiele hierfür sind mit H₂O₂ organische Persäuren bildende N-Acyl- bzw. O-Acyl-Verbindungen, vorzugsweise mehrfach acylierte Alkylendiamine wie N,N'tetraacylierte Diamine, acylierte Glykolurile, insbesondere Tetraacetylglykoluril, N-acylierte Hydantoine, Hydrazide, Triazole, Triazine, Urazole, Diketopiperazine, Sulfurylamide und Cyanurate, außerdem Carbonsäureester wie p-(Alkanoyloxy)benzolsulfonate, insbesondere Natriumisononanoyloxybenzolsulfonat, und der p-(Alkenoyloxy)benzolsulfonate, ferner Caprolactam-Derivate, Carbonsäureanhydride wie Phthalsäureanhydrid und Ester von Polyolen wie Glucosepentaacetat. Weitere bekannte Bleichaktivatoren sind acetylierte Mischungen aus Sorbitol und Mannitol, wie sie beispielsweise in der europäischen Patentanmeldung EP-A-0 525 239 beschrieben werden, und acetyliertes Pentaerythrit. Der Gehalt der bleichmittelhaltigen Mittel an Bleichaktivatoren liegt in dem üblichen Bereich, vorzugsweise zwischen 1 und 10 Gew.-% und insbesondere zwischen 3 und 8 Gew.-%. Besonders bevorzugte Bleichaktivatoren sind N,N,N',N'-Tetraacetylethylendiamin (TAED), 1,5-Diacetyl-2,4-dioxo-hexahydro-1,3,5-triazin (DADHT) und acetylierte Sorbitol-Mannitol-Mischungen (SORMAN). Der Bleichaktivator kann in bekannter Weise mit Hüllsubstanzen überzogen oder, gegebenenfalls unter Einsatz von Hilfsmitteln, insbesondere Methylcellulosen und/oder Carboxymethylcellulosen, granuliert oder extrudiert/pelletiert worden sein und gewünschtenfalls weitere Zusatzstoffe, beispielsweise Farbstoff, enthalten. Vorzugsweise enthält ein derartiges Granulat über 70 Gew.-%, insbesondere von 90 bis 99 Gew.-% Bleichaktivator. Vorzugsweise wird ein Bleichaktivator eingesetzt, der unter Waschbedingungen Peressigsäure bildet.

Zusätzlich zu den oben aufgeführten konventionellen Bleichaktivatoren oder an deren Stelle können auch die aus den europäischen Patentschriften EP 0 446 982 und EP 0 453 003 bekannten Sulfonimine und/oder bleichverstärkende Übergangsmetallsalze beziehungsweise Übergangsmetallkomplexe als sogenannte Bleichkatalysatoren enthalten sein. Zu den in Frage kommenden Übergangsmetallverbindungen gehören insbesondere die aus der deutschen Patentanmeldung DE 195 29 905 bekannten Mangan-, Eisen-, Cobalt-, Ruthenium- oder Molybdän-Salenkomplexe und deren aus der deutschen Patentanmeldung DE 196 20 267 bekannte N-Analogverbindungen, die aus der deutschen Patentanmeldung DE 195 36 082 bekannten Mangan-, Eisen-, Cobalt-, Ruthenium- oder Molybdän-Carbonylkomplexe, die in der deutschen Patentanmeldung DE 196 05 688 beschriebenen Mangan-, Eisen-, Cobalt-, Ruthenium-, Molybdän-, Titan-, Vanadium- und Kupfer-Komplexe mit stickstoffhaltigen Tripod-Liganden, die aus der deutschen Patentanmeldung DE 196 20 411 bekannten Cobalt-, Eisen-, Kupfer- und Ruthenium-Amminkomplexe, die in der deutschen Patentanmeldung DE 44 16 438 beschriebenen Mangan-, Kupfer- und Cobalt-Komplexe, die in der europäischen Patentanmeldung EP 0 272 030 beschriebenen Cobalt-Komplexe, die aus der europäischen Patentanmeldung EP 0 693 550 bekannten Mangan-Komplexe, die aus der europäischen Patentschrift EP 0 392 592 bekannten Mangan-, Eisen-, Cobalt- und Kupfer-Komplexe und/oder die in der europäischen Patentschrift EP 0 443 651 oder den europäischen Patentanmeldungen EP 0 458 397, EP 0 458 398, EP 0 549 271, EP 0 549 272, EP 0 544 490 und EP 0 544 519 beschriebenen Mangan-Komplexe. Kombinationen aus Bleichaktivatoren und Übergangsmetall-Bleichkatalysatoren sind beispielsweise aus der deutschen Patentanmeldung DE 196 13 103 und der internationalen Patentanmeldung WO 95/27775 bekannt. Bleichverstärkende Übergangsmetallkomplexe, insbesondere mit den Zentralatomen Mn, Fe, Co, Cu, Mo, V, Ti und/oder Ru, werden in üblichen Mengen, vorzugsweise in einer Menge bis zu 1 Gew.-%, insbesondere von 0,0025 Gew.-% bis 0,25 Gew.-% und besonders bevorzugt von 0,01 Gew.-% bis 0,1 Gew.-%, jeweils bezogen auf gesamtes Mittel, eingesetzt.

Zu den in erfindungsgemäßen Mitteln gegebenenfalls enthaltenen Enzymen gehören Proteasen, Amylasen, Pullulanasen, Cellulasen, Cutinasen und/oder Lipasen, beispielsweise Proteasen wie BLAP®, Optimase®, Opticlean®, Maxacal®, Maxapem®, Durazym®, Purafect® OxP, Esperase® und/oder Savinase®, Amylasen wie Termamyl®, Amylase-LT®, Maxamyl®, Duramyl®, Purafect® OxAm, Cellulasen wie Celluzyme®, Carezyme®, KAC® und/oder die aus den internationalen Patentanmeldungen WO 96/34108 und WO 96/34092 bekannten Cellulasen und/oder Lipasen wie Lipolase®, Lipomax®, Lumafast® und/oder Lipozym®. Die verwendeten Enzyme können, wie zum Beispiel in den internationalen Patentanmeldungen WO 92/11347 oder WO 94/23005 beschrieben, an Trägerstoffen adsorbiert und/oder in Hüllsubstanzen eingebettet sein, um sie gegen vorzeitige Inaktivierung zu schützen. Sie sind in erfindungsgemäßen Wasch- und Reinigungsmitteln vorzugsweise in Mengen bis zu 10 Gew.-%, insbesondere von 0,05 Gew.-% bis 5 Gew.-%, enthalten, wobei besonders bevorzugt gegen oxidativen Abbau stabilisierte Enzyme, wie sie zum Beispiel aus den internationalen Patentanmeldungen WO 94/02597, WO 94/02618, WO 94/18314, WO 94/23053 oder WO 95/07350 bekannt sind, eingesetzt werden. Sollen in den Mitteln die vorne beschriebenen Stärke-haltigen Compounds eingesetzt werden, so ist es bevorzugt, wenn dieses Mitteln keine Amylasen enthält.

Als Stabilisatoren insbesondere für Perverbindungen und Enzyme, die empfindlich gegen Schwermetallionen sind, kommen die Salze von Polyphosphonsäuren, insbesondere 1-Hydroxyethan-1,1-diphosphonsäure (HEDP), Diethylentriaminpentamethylenphosphonsäure (DETPMP) oder Ethylendiamintetramethylenphosphonsäure in Betracht.

Zusätzlich können die Mittel auch Komponenten enthalten, welche die Öl- und Fett-Auswaschbarkeit aus Textilien positiv beeinflussen. Dieser Effekt wird besonders deutlich, wenn ein Textil verschmutzt wird, das bereits vorher mehrfach mit einem erfindungsgemäßen Waschmittel, das diese öl- und fettlösende Komponente enthält, gewaschen wurde. Zu den bevorzugten öl- und fettlösenden Komponenten zählen beispielsweise nicht-ionische Celluloseether wie Methylcellulose und Methylhydroxypropylcellulose mit einem Anteil an Methoxyl-Gruppen von 15 bis 30 Gew.-% und an Hydroxypropoxyl-Gruppen von 1 bis 15 Gew.-%, jeweils bezogen auf den nichtionischen Celluloseether, sowie die aus dem Stand der Technik bekannten Polymere der Phthalsäure und/oder der Terephthalsäure bzw. von deren Derivaten, insbesondere Polymere aus Ethylenterephthalaten und/oder Polyethylenglykolterephthalaten oder anionisch und/oder nichtionisch modifizierten Derivaten von diesen. Besonders bevorzugt von diesen sind die sulfonierten Derivate der Phthalsäure- und der Terephthalsäure-Polymere.

Beim Einsatz in maschinellen Waschverfahren kann es von Vorteil sein, den Mitteln übliche Schauminhibitoren zuzusetzen. Als Schauminhibitoren eignen sich beispielsweise Seifen natürlicher oder synthetischer Herkunft, die einen hohen Anteil an C₁₈-C₂₄-Fettsäuren aufweisen. Geeignete nichttensidartige Schauminhibitoren sind beispielsweise Organopolysiloxane und deren Gemische mit mikrofeiner, ggf. silanierter Kieselsäure sowie Paraffine, Wachse, Mikrokristallinwachse und deren Gemische mit silanierter Kieselsäure oder Bistearylethylendiamid. Mit Vorteilen werden auch Gemische aus verschiedenen Schauminhibitoren verwendet, z.B. solche aus Siliconen, Paraffinen oder Wachsen. Vorzugsweise sind die Schauminhibitoren, insbesondere Siliconund/oder Paraffin-haltige Schauminhibitoren, an eine granulare, in Wasser lösliche bzw. dispergierbare Trägersubstanz gebunden. Insbesondere sind dabei Mischungen aus Paraffinen und Bistearylethylendiamiden bevorzugt.

Vergrauungsinhibitoren haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Natur geeignet, beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet.

Weiterhin lassen sich lösliche Stärkepräparate und andere als die obengenannten Stärkeprodukte verwenden, z.B. abgebaute Stärke, Aldehydstärken usw.. Bevorzugt ist in den erfindungsgemäßen Mitteln der Einsatz von Polyvinylpyrrolidon , insbesondere in Form von PVP-Granulaten. Weiterhin bevorzugt werden Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische. Vergrauungsinhibitoren, wie PVP, werden üblicherweise in Mengen von 0,1 bis 5 Gew.-%, bezogen auf die Mittel, eingesetzt.

Die Mittel können als optische Aufheller Derivate der Diaminostilbendisulfonsäure bzw. deren Alkalimetallsalze enthalten. Geeignet sind z.B. Salze der 4,4'-Bis(2-anilino-4-morpholino-1,3,5-triazinyl-6-amino)stilben-2,2'-disulfonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, z.B. die Alkalisalze des 4,4'-Bis(2-sulfostyryl)-diphenyls, 4,4'-Bis(4-chlor-3-sulfostyryl)-diphenyls, oder 4-(4-Chlorstyryl)-4'-(2-sulfostyryl)-diphenyls. Auch Gemische der vorgenannten Aufheller können verwendet werden.

Außer den genannten Inhaltsstoffen können die Mittel auch andere bekannte, in Wasch-, Spül- oder Reinigungsmitteln üblicherweise eingesetzte Zusatzstoffe, beispielsweise geringe Mengen an neutralen Füllsalzen sowie Farb- und Duftstoffe, Trübungsmittel oder Perglanzmittel enthalten.

Das Schüttgewicht der vorteilhafterweise granularen Wasch- und/oder Reinigungsmiittel beträgt vorzugsweise mindestens etwa 600 g/l, insbesondere 650 bis 1100 g/l. Es können jedoch durchaus auch Mittel hergestellt werden, welche ein niedrigeres Schüttgewicht aufweisen. Insbesondere kann es bevorzugt sein, die Mittel aus granularen Einzelkomponenten, in einer Art Baukastensystem, zusammenzustellen.

### Beispiele

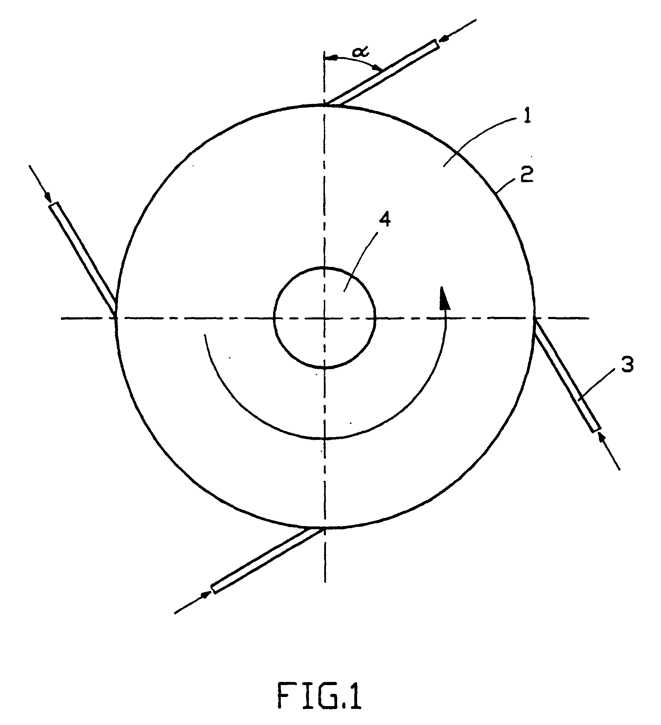

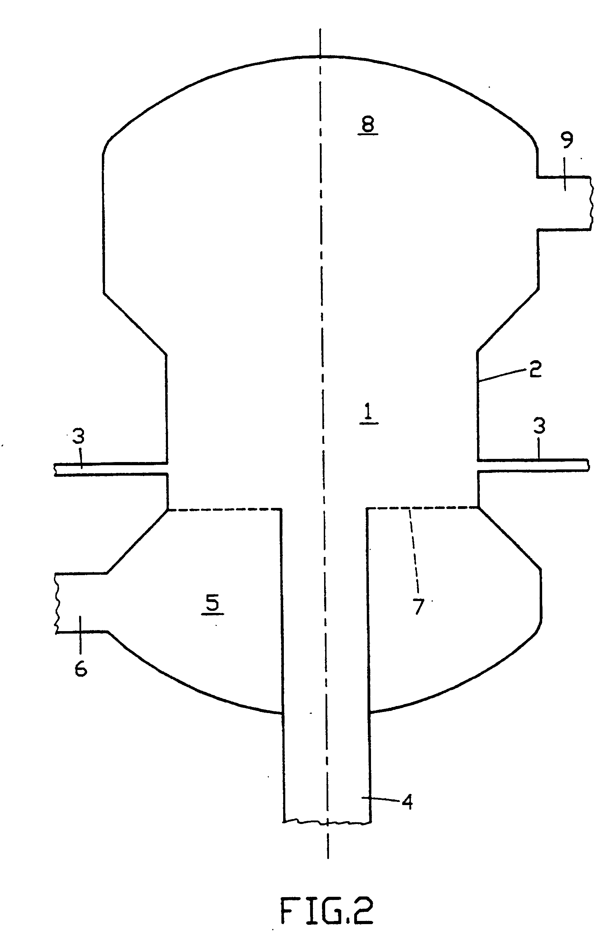

### Liste der in den Figuren 1 und 2 verwendeten Bezugszeichen

- 1: Wirbelschichtraum
- 2: Außenwand
- 3: Einblaskanal, 2-fach
- 4: Produktaustrag mit Sichtereffekt
- 5: Zuluftverteilerraum
- 6: Zuluftkanal
- 7: Siebboden
- 8: Beruhigungsraum
- 9: Abluftkanal
- α: Anstellwinkel

Eine wäßrige Polymer-Lösung, der bei Bedarf das Trägermaterial zugesetzt wurde, wurde durch eine Zweistoffdüse in einen modifizierten Wirbelschichttrockner AGT 400 (Fa. Glatt, 400 mm Bodendurchmesser) mit Conidurboden verdüst. Dabei wurde an dem Wirbelschichttrockner die in Figur 1 und Figur 2 erläuterte Veränderung vorgenommen.

Die in den beiden Figuren dargestellte und zur Herstellung der Beispielgranulate verwendete Wirbelschicht besitzt einen zylindrischen Wirbelschichtraum **1,** von dem aus eine konische Verbreiterung zu einem zylindrischen Beruhigungsraum **8** führt, in den der Abluftkanal **9** angeschweißt ist. Die Luftzufuhr erfolgt in erster Linie über den Zuluftkanal **6,** der in den Zuluftverteilerraum **5** mündet, von dem aus die Zuluft über den Siebboden**7** in den Wirbelschtchtraum **1** gelangt. Erfindungsgemäß besitzt die Wirbelschichtapparatur auch eine Luftzufuhr oberhalb des Siebbodens **7**. Diese Luftzufuhr ist realisiert durch 2 Einblaskanäle **3**, die im gleichmäßigen Abstand voneinander und mit einem Anstellwinkel α = 60° an der Außenwand **2** angebracht sind. In dieser Wirbelschichtapparatur beträgt die übliche Ruhehöhe der Schichtmasse 0,2 m und die Einblaskanäle **3** befinden sich in 30 % dieser Höhe. Der Austrag aus der kontinuierlich zu betreibenden Wirbelschicht erfolgt über das Sichterrohr **4**.

Mit den in Tabelle 1 angegebenen Verfahrensparametem wurden Compounds mit Zusammensetzungen entsprechend Tabelle 2 erhalten. Dabei wurden 10 % der gesamten Zuluft über die zusätzlichen Einblaskanäle zugeführt.

Zur Herstellung des Compounds E5 wurde eine homogene Mischung des Dextrosesirups mit der Lösung des polymeren Polycarboxylats verdüst. Zur Herstellung des Compounds E6 wurde das Maltodextrin in Pulverform eingesetzt und durch Aufdüsen der Polycarboxylat-Lösung unter gleichzeitiger Trocknung so granuliert, daß sich Granulate bildeten in denen die äußere Hülle von dem polymeren Polycarboxylat gebildet wird. Das Alkylbenzolsulfonat in E7 wurde in Form einer Paste eingesetzt, die gemeinsam mit der Polymerlösung verdüst wurde.

**Tabelle 1:**

| Verfahrensparameter | | | | | | | |
|---|---|---|---|---|---|---|---|
| | **E1** | **E2** | **E3** | **E4** | **E5** | **E6** | **E7** |
| Polymergehalt der Lösung [Gew.-%] | 40 | 40 | 40 | 40 | 40 | 40 | 45 |
| Bodenlufttemperatur [°C] | 164 | 156 | 158 | 165 | 130 | 130 | 150 |
| Wirbellufttemperatur [°C] | 85 | 91 | 90 | 92 | 75 | 75 | 85 |
| Zuluft [m³/h) | 670 | 760 | 740 | 735 | 735 | 735 | 650 |
| Durchsatz an Flüssigkeit [kg/h] | 24 | 24 | 25 | 25 | 21 | 21 | 15 |

Die erhaltenen Produkte sind staubfrei, der Wassergehalt und das Schüttgewicht sind über die Verweildauer in der Wirbelschicht steuerbar.

**Tabelle 2:**

| Zusammensetzung der Compounds | | | | | |
|---|---|---|---|---|---|
| | **E2** | **E3** | **E4** | **E5** | **E6** |
| Sokalan CP5® [Gew.-%] | 80 | 84 | 88 | 49 | 39 |
| Stärke (Gew.-%) | - | - | - | 43① | 54② |
| Sokalan PA 30® [Gew.-%] | - | - | - | - | - |
| Zeolith A [Gew.-%] | - | - | 2,4 | - | - |
| Natriumcarbonat [Gew.-%] | - | - | - | - | - |
| Natriumsulfat [Gew.-%] | 12 | 8 | - | - | - |
| ABS | - | - | - | - | - |
| Wasser [Gew.-%] | 8 | 8 | 8,3 | 8,4 | 7 |
| Komgrößenverteilung [Gew-%] | | | | | |
| < 0,4 mm | 5 | 19 | 5 | - | 78 |
| > 0,4 mm | 51 | 61 | 32 | 0,3 | 20 |
| > 0,8 mm | 25 | 13 | 18 | 1,2 | 1,5 |
| > 1,0 mm | 18 | 7 | 40 | 40,0 | 0,8 |
| > 1,6 mm | 1 | - | 5 | 58,5 | - |
| Schüttgewicht [g/l] | 350-430 | 425-490 | 300 | 315 | 520 |

Die Korngrößenverteilung wurde direkt am Austrag der Wirbelschicht gemessen, eine Grobkornabsiebung erfolgte nicht.

Als Rohstoffe wurden folgende Produkte eingesetzt:

| | |
|---|---|
| **Sokalan CP5®** | Acrylsäure-Maleinsäure-Copolymer, |
| | Handelsprodukt der Firma BASF |
| **Stärke** | ①Cerestar C* Plus 16862 |
| | ②Cerestar C* Dry MD 01910 |
| **Sokalan PA 30®** | Acrylsäure-Polymer; Handelsprodukt der Firma BASF |

Zur Bestimmung des Löslichkeitsverhaltens der Compounds (L-Test) wurden in einem 2 I-Becherglas 8 g des zu testenden Granulats unter Rühren (800 Ulmin mit Laborrührer/Propeller-Rührkopf 1,5 cm vom Becherglasboden entfernt zentriert) eingestreut und 1,5 Minuten bei 30 °C gerührt. Der Versuch wurde mit Wasser einer Härte von 16 °d durchgeführt. Anschließend wurde die Lauge durch ein Sieb (80 µm) abgegossen. Das Becherglas wurde mit sehr wenig kaltem Wasser über dem Sieb ausgespült. Es erfolgte eine 2fach-Bestimmung. Die Siebe wurden im Trockenschrank bei 40 °C ± 2 °C bis zur Gewichtskonstanz getrocknet und der Rückstand ausgewogen. Bei den erfindungsgemäßen Beispielen konnte kein Rückstand nachgewiesen werden .

Sämtliche erfindungsgemäß hergestellten Granulate E1 bis E7 lassen sich mittelfristig an der Luft lagern, ohne dabei zu verkleben, oder ihre Rieselfähigkeit einzubüßen. Die Rieselfähigkeit wurde mit Hilfe eines Klumptests überprüft.

Hierzu wurden 15 ml des jeweiligen Compounds in einen 25 ml Meßzylinder abgemessen und in einen Edelstahizylinder, der in einer Porzellanschale oder ähnlichen stand, überführt. Dann wurde ein Edelstahlstempel, ohne daß das Pulver zusammengedrückt wurde, in den Zylinder eingesetzt und mit einem Gewicht von 500 g belastet. Nach 30 Minuten bzw. 24 Stunden wurde das Gewicht entfernt, der Zylinder angehoben und das Mittel mit dem Stempel herausgedrückt. Der Test wurde bei Raumtemperatur bzw. bei 40°C durchgeführt. Die Preßlinge aus den Compounds gemäß E1 - E7 zerfielen unter allen angegebenen Bedingungen sofort beim Herausdrücken.

## Patentansprüche

1. Verfahren zur Herstellung von löslichen Polymer-Granulaten, die sich als Zusatz in Wasch- und/oder Reinigungsmitteln eignen, **dadurch gekennzeichnet, daß** eine wäßrige Zubereitungsform des Polymeren, die mindestens 30 Gew.-% Polymer enthält, in einer runden Wirbelschicht, in der über eine Luftzuführung oberhalb des Wirbelbodens eine Wirbelströmung um die senkrechte Achse der Apparatur erzeugt wird, granuliert und gleichzeitig getrocknet wird.

2. Verfahren zur Herstellung von löslichen Polymer-Granulaten nach Anspruch 1, **dadurch gekennzeichnet, daß** das Verfahren in einer runden Wirbelschicht abläuft, in der eine zusätzliche Luftzufuhr oberhalb des Wirbelbodens (7) angebracht ist, die über mindestens zwei Einblaskanäle (3) verfügt, die in gleichmäßigem Abstand voneinander und in gleicher Höhe über dem Wirbelboden in einem Anstellwinkel α von mindestens 30° und maximal 90° angebracht sind.

3. Verfahren zur Herstellung von löslichen Polymer-Granulaten nach einem der Ansprüche 1 oder 2, **dadurch gekennzeichnet, daß** das Verfahren in einer runden Wirbelschicht abläuft, in der die zusätzliche Luftzufuhr so oberhalb des Wirbelbodens angebracht ist, daß die Einblaskanäle (3) in maximal 50%, bevorzugt in 10 bis 30 %, der Ruhehöhe der Schichtmasse liegen.

4. Verfahren zur Herstellung von löslichen Polymer-Granulaten nach einem der Ansprüche 1 bis 3, **dadurch gekennzeichnet, daß** das Verfahren in einer runden Wirbelschicht abläuft, in der die zusätzliche Luftzufuhr über mehr als zwei, bevorzugt über vier, Einblaskanäle (3) verfügt.

5. Verfahren zur Herstellung von löslichen Polymer-Granulaten nach einem der Ansprüche 1 bis 4, **dadurch gekennzeichnet, daß** das Verfahren in einer runden Wirbelschicht abläuft, in der der Anstellwinkel der Einblaskanäle (3) 30° bis 75°, bevorzugt 45° bis 70°, und ganz besonders bevorzugt 60°, beträgt.

6. Verfahren zur Herstellung von löslichen Polymer-Granulaten nach einem der Ansprüche 1 bis 5, **dadurch gekennzeichnet, daß** als wäßrige Polymer-Zubereitungsform Lösungen polymerer Polycarboxylate, bevorzugt Homo- oder Copolymere der Acryl-, Methacryloder Maleinsäure bzw. wasserlöslicher Salze dieser Polymere und ganz besonders bevorzugt Polymere mit einem Molgewicht zwischen 500 und 100.000 g/mol, eingesetzt werden.

7. Verfahren zur Herstellung von löslichen Polymer-Granulaten nach einem der Ansprüche 1 bis 5, **dadurch gekennzeichnet, daß** als wäßrige Polymer-Zubereitungsform Lösungen von Homo- oder Copolymeren von Vinylpyrrolidon eingesetzt werden, das ein Molgewicht zwischen 1000 und 200.000 g/mol, bevorzugt zwischen 1000 und 100.000 g/mol, aufweist.

8. Verfahren zur Herstellung von löslichen Polymer-Granulaten nach einem der Ansprüche 1 bis 6, **dadurch gekennzeichnet, daß** als Polymere neben polymeren Polycarboxylaten auch Dextrine eingesetzt werden, wobei entweder eine homogene Lösung aus den beiden Polymeren in den Granulationsraum eingeprüht wird oder das Dextrin in fester Form vorgelegt und eine Lösung des Polycarboxylats eingesprüht wird.

9. Verfahren zur Herstellung von löslichen Polymer-Granulaten nach einem der Ansprüche 1 bis 8, **dadurch gekennzeichnet, daß** als Zumischkomponente anorganische Trägermaterialien, bevorzugt Natriumsulfat, Natriumcarbonat oder Zeolithe eingesetzt werden.

10. Lösliche Polymer-Granulate, die sich als Zusatz in Wasch- und/oder Reinigungsmitteln eignen, **dadurch gekennzeichnet, daß** die Granulate kugelförmig sind und 50-95 Gew.-% Polymer sowie mindestens eine Zumischkomponente aus der Gruppe der anorganischen Trägermaterialien, bevorzugt Natriumsulfat, Natriumcarbonat, Natriumcitrat oder Zeolithe, enthalten und der Gehalt an Trägermaterial im Granulat unterhalb 40 Gew.-%, bevorzugt unter 25 Gew.-%, liegt.

11. Lösliche Polymer-Granulate nach Anspruch 10, **dadurch gekennzeichnet, daß** es sich bei den Polymeren um polymere Polycarboxylate, bevorzugt um Homo- oder Copolymere der Acryl-, Methacryl- oder Maleinsäure bzw. wasserlösliche Salze dieser Polymere und ganz besonders bevorzugt um Polymere mit einem Molgewicht zwischen 500 und 100.000 g/mol handelt.

12. Lösliche Polymer-Granulate nach Anspruch 10, **dadurch gekennzeichnet, daß** es sich bei dem Polymeren um ein Homo- oder Copolymer von Vinylpyrrolidon handelt, das ein Molgewicht zwischen 1000 und 200.000 g/mol, bevorzugt zwischen 1000 und 100.000 g/mol, aufweist.

13. Lösliche Polymer-Granulate nach Anspruch 10 oder 11, **dadurch gekennzeichnet, daß** die Granulate Dextrine und polymere Polycarboxylate enthalten, wobei das Verhältnis Dextrin zu polymerem Polycarboxylat im Granulat bevorzugt in dem Bereich von 4 : 1 bis 1 : 2 liegt.

14. Lösliche Polymer-Granulate nach einem der Ansprüche 10 bis 13, **dadurch gekennzeichnet, daß** der Polymergehalt der Granulate im Bereich von 75 bis 90 Gew.-% liegt.

15. Wasch- oder Reinigungsmittel, **dadurch gekennzeichnet, daß** es neben tensidhaltigen Bestandteilen mindestens ein lösliches Polymer-Granulat enthält, wobei das Polymer-Granulat ausgewählt ist aus den Polymer-Granulaten gemäß den Ansprüchen 10 bis 14 bzw. den Verfahrensprodukten aus den Verfahren gemäß den Ansprüchen 1 bis 9.

## Claims

1. A process for the production of soluble polymer granules suitable as an additive in detergents and/or cleaning compositions, **characterized in that** a water-based preparation of the polymer which contains at least 30% by weight of polymer is granulated and simultaneously dried in a round fluidized bed in which an eddy flow is produced about the vertical axis of the dryer via an air inlet above the diffusor plate.

2. A process for the production of soluble polymer granules as claimed in claim 1, **characterized in that** the process is carried out in a round fluidized bed in which an additional air supply system is disposed above the diffusor plate (7), this additional air supply system having at least two air injection tubes (3) which are arranged at a uniform distance apart and at the same level above the diffusor at an angle of incidence α of at least 30° and at most 90°.

3. A process for the production of soluble polymer granules as claimed in claim 1 or 2, **characterized in that** the process is carried out in a fluidized bed in which the additional air supply system is located above the diffusor in such a way that the air injection tubes (3) are situated at a maximum of 50% and preferably at 10 to 30% of the resting height of the bed material.

4. A process for the production of soluble polymer granules as claimed in any of claims 1 to 3, **characterized in that** the process is carried out in a round fluidized bed in which the additional air supply system comprises more than two, preferably four, air injection tubes (3).

5. A process for the production of soluble polymer granules as claimed in any of claims 1 to 4, **characterized in that** the process is carried out in a round fluidized bed in which the angle of incidence of the injection tubes (3) is 30° to 75°, preferably 45° to 70° and more preferably 60°.

6. A process for the production of soluble polymer granules as claimed in any of claims 1 to 5, **characterized in that** solutions of polymeric polycarboxylates, preferably homopolymers or copolymers of acrylic, methacrylic or maleic acid or water-soluble salts of these polymers and most preferably polymers with a molecular weight of 500 to 100,000 g/mol are used as the water-based polymer preparation.

7. A process for the production of soluble polymer granules as claimed in any of claims 1 to 5, **characterized in that** solutions of homopolymers or copolymers of vinyl pynolidone which has a molecular weight of 1000 to 200,000 g/mol and preferably in the range from 1000 to 100,000 g/mol are used as the water-based polymer preparation.

8. A process for the production of soluble polymer granules as claimed in any of claims 1 to 6, **characterized in that**, besides polycarboxylates, dextrins are also used as polymers, either a homogeneous solution of the two polymers being sprayed into the granulation chamber or the dextrin being introduced first in solid form and a solution of the polycarboxylate being sprayed in.

9. A process for the production of soluble polymer granules as claimed in any of claims 1 to 8, **characterized in that** inorganic carrier materials, preferably sodium sulfate, sodium carbonate or zeolites are used as the admixing component

10. Soluble polymer granules suitable as an additive in detergents and/or cleaning compositions, **characterized in that** the granules are spherical and contain 50 to 95% by weight polymer and at least one admixing component. from the group consisting of inorganic carries materials preferably sodium sulfate, sodium carbonate, sodium citate or zeolides and **in that** the content of the carries materials in the granules is below 40% by wheight and preferably below 25% by wheight.

11. Soluble polymer granules as claimed in claim 10, **characterized in that** the polymers are polymeric polycarboxylates, preferably homopolymers or copolymers of acrylic, methacrylic or maleic acid or water-soluble salts of these polymers and most preferably polymers with a molecular weight of 500 to 100,000 g/mol.

12. Soluble polymer granules as claimed in claim 10, **characterized in that** the polymer is a homopolymer or copolymer of vinyl pyrrolidone which has a molecular weight of 1000 to 200,000 g/mol and preferably in the range from 1000 to 100,000 g/mol.

13. Soluble polymer granules as claimed in claim 10 or 11, **characterized in that** the granules contain dextrins and polymeric polycarboxylates, the ratio of dextrin to polymeric polycarboxylate in the granules preferably being 4:1 to 1:2.

14. Soluble polymer granules as claimed in any of claims 10 to 14, **characterized in that** the polymer content of the granules is in the range from 75 to 90% by weight.

15. A detergent or cleaning composition, **characterized in that**, besides surfactant-containing constituents, it contains soluble polymer granules selected from the polymer granules claimed in claims 10 to 15 or the products of the process claimed in claims 1 to 9.

## Revendications

1. Procédé pour la fabrication de produits granulés de polymères solubles, qui conviennent en tant qu'additifs dans des produits de lavage et/ou de nettoyage,
**caractérisé en ce qu'**
une forme de préparation aqueuse du polymère, qui contient au moins 30 % en poids de polymère, est granulée et en même temps séchée dans un lit fluidisé circulaire, dans lequel un courant tourbillonnaire est engendré autour de l'axe vertical de l'appareil par une introduction d'air au-dessus du fond du lit fluidisé.

2. Procédé pour la fabrication de produits granulés de polymères solubles selon la revendication 1,
**caractérisé en ce que**
le procédé se déroule dans un lit fluidisé circulaire dans lequel est placé au-dessus du fond (7) du lit fluidisé une arrivée d'air supplémentaire qui dispose d'au moins deux canaux d'insuffiation (3) qui sont placés à égale distance l'un de l'autre et à la même hauteur au-dessus du fond du lit fluidisé, en un angle d'attaque α d'au moins 30° et d'au maximum 90°.

3. Procédé pour la fabrication de produits granulés de polymères solubles selon la revendication 1 ou 2,
**caractérisé en ce que**
le procédé se déroule dans un lit fluidisé circulaire dans lequel l'introduction d'air supplémentaire est placée au-dessus du fond du lit fluidisé de manière que les canaux d'insufflation (3) se trouvent au maximum à 50 %, de préférence à 10-30 % de la hauteur de la masse de la couche au repos.

4. Procédé pour la fabrication de produits granulaires de polymères solubles selon l'une quelconque des revendications 1 à 3,
**caractérisé en ce que**
le procédé se déroule dans un lit fluidisé circulaire dans lequel l'introduction d'air supplémentaire s'effectue par plus de deux, de préférence plus de quatre canaux d'insufflation (3).

5. Procédé pour la fabrication de produits granulés de polymères solubles selon l'une quelconque des revendications 1 à 4,
**caractérisé en ce que**
le procédé de déroule dans un lit fluldisé circulaire dans lequel l'angle d'attaque des canaux d'insufflation (3) va de 30° à 75, de préférence de 45° à 70° et, de façon tout particulièrement préférée de 60°.

6. Procédé pour la fabrication de produits granulés de polymères solubles selon l'une quelconque des revendications 1 à 5,
**caractérisé en ce que**
comme forme de préparation aqueuse de polymère, on utilise des solutions de polycarboxylates polymères, de préférence des homo- ou copolymères de l'acide acrylique, méthacrylique ou maléique ou des sels hydrosolubles de ces polymères, et, de façon tout particulièrement préférée, des polymères ayant une masse moléculaire comprise entre 500 et 100 000 g/mole.

7. Procédé pour la fabrication de produits granulés de polymères solubles selon l'une quelconque des revendications 1 à 5,
**caractérisé en ce que**
comme forme de préparation aqueuse de polymère, on utilise des solutions d'homopolymères ou de copolymères de vinylpyrrolidone qui présentent une masse moléculaire comprise entre 1 000 et 200 000 g/mole, de préférence entre 1 000 et 100 000 g/mole.

8. Procédé pour la fabrication de produits granulés de polymères solubles selon l'une quelconque des revendications 1 à 6,
**caractérisé en ce qu'**
on utilise comme polymères, en plus de polycarboxylates polymères, également des dextrines, soit une solution homogène des deux polymères étant injectée dans l'espace de granulation, soit la dextrine étant disposée au préalable sous forme solide et une solution du polycarboxylate étant injectée.

9. Procédé pour la fabrication de produits granulés de polymères solubles selon l'une quelconque des revendications 1 à 8.
**caractérisé en ce qu'**
on utilise comme composant de mélange des substances porteuses minérales, de préférence du sulfate de sodium, du carbonate de sodium ou des zéolithes.

10. Produits granulés de polymères solubles qui sont appropriés comme additif dans des produits de lavage et/ou de nettoyage,
**caractérisés en ce que**
les produits granulés sont sphériques et contiennent de 50 à 95 % en poids en polymère ainsi qu'au moins un composant de mélange choisi dans le groupe des substances porteuses minérales, de préférence le sulfate de sodium, le carbonate de sodium, le citrate de sodium ou des zéolithes, et la teneur du produit gránulé en substance porteuse est inférieure à 40 % en poids, de préférence inférieure à 25 % en poids.

11. Produits granulés de polymères solubles selon la revendication 10,
**caractérisés en ce que**
les polymères consistent en polycarboxylates polymères, de préférence en homopolymères ou copolymères de l'acide acrylique, méthacrylique ou maléique, ou en sels hydrosolubles de ces polymères, et, de façon tout particulièrement préférée, en polymères ayant une masse moléculaire comprise entre 500 et 100 000 g/mole.

12. Produits granulés de polymères solubles selon la revendication 10,
**caractérisés en ce que**
les polymères consistent en homopolymère ou copolymère de vinylpyrrolidone qui présente une masse moléculaire comprise 1 000 et 200 000 g/mole, de préférence entre 1 000 et 100 000 g/mole.

13. Produits granulés de polymères solubles selon la revendication 10 ou 11,
**caractérisés en ce que**
les produits granulés contiennent des dextrines et des polycarboxylates polymères, le rapport de la dextrine au polycarboxylate polymère dans le produit granulé étant de préférence dans la plage de 4:1 à 1:2.

14. Produits granulés de polymères solubles selon l'une quelconque des revendications 10 à 13,
**caractérisés en ce que**
la teneur en polymères des produits granulés se situe dans la plage allant de 75 à 90 % en poids.

15. Produit de lavage et de nettoyage,
**caractérisé en ce que**
outre des composants contenant des tensioactifs, il contient au moins un produit granulé de polymère soluble, le produit granulé de polymère étant choisi parmi les produits granulés de polymères selon les revendications 10 à 14 ou les produits obtenus par les procédés selon les revendications 1 à 9.
